Europäisches Patentamt

European Patent Office

Office européen des brevets

(19)

(11) **EP 1 102 816 B1**

(12) **FASCICULE DE BREVET EUROPEEN**

(45) Date de publication et mention
de la délivrance du brevet:
**23.10.2002   Bulletin 2002/43**

(51) Int Cl.⁷: **C08L 95/00**, C04B 24/36

(86) Numéro de dépôt international:
**PCT/FR99/01669**

(21) Numéro de dépôt: **99929449.9**

(22) Date de dépôt: **08.07.1999**

(87) Numéro de publication internationale:
**WO 00/004096 (27.01.2000 Gazette 2000/04)**

(54) **EMULSIONS DE BITUME, PROCEDE POUR LEUR OBTENTION, ET COMPOSITIONS LES CONTENANT**

BITUMINÖSE EMULSIONEN, VERFAHREN ZU IHRER HERSTELLUNG, UND DIESE ENTHALTENDE ZUSAMMENSETZUNGEN

BITUMEN EMULSIONS, METHOD FOR OBTAINING THEM AND COMPOSITIONS CONTAINING SAME

(84) Etats contractants désignés:
**DE ES FR GB IT**
Etats d'extension désignés:
**AL LT LV MK RO SI**

(30) Priorité: **16.07.1998   FR 9809242**

(43) Date de publication de la demande:
**30.05.2001   Bulletin 2001/22**

(73) Titulaire: **LAFARGE**
**75116 Paris (FR)**

(72) Inventeurs:
• **DRESIN, Jean-Marc**
  **F-07210 Chomerac (FR)**

• **PICARD, Nadège**
  **F-69008 Lyon (FR)**
• **SIAUD, Brice**
  **F-38540 Heyrieux (FR)**
• **STOCK, Claude**
  **F-38460 Soleymieu (FR)**

(74) Mandataire: **Cabinet Hirsch**
  **34, Rue de Bassano**
  **75008 Paris (FR)**

(56) Documents cités:
  **FR-A- 2 076 630          US-A- 3 432 320**
  **US-A- 4 084 981          US-A- 5 156 652**

## Description

La présente invention concerne des émulsions de bitume stabilisées et leur incorporation dans des compositions composites comprenant, soit des liants hydrauliques ou organiques, soit des charges minérales, ou un mélange de ces composants. La présente invention concerne plus particulièrement des émulsions aqueuses de bitume stabilisées par des tensioactifs, et des compositions formulées à partir de telles émulsions et destinées à être incorporées à la mise en oeuvre aux composants ci-dessus, pour une utilisation dans l'industrie du bâtiment ou du génie civil, et notamment des compositions de mortier-colle, joints pour voirie routière, peintures, mortiers de sol, enduits et bétons.

La formulation de produits de type mortier-colles, enduits pour façades, peintures, enduits de ragréage pour sols, etc, comprend un liant de base généralement hydraulique ou organique, auquel on ajoute divers additifs, voire d'autres liants, pour améliorer, entre autres les propriétés de rhéologie (mise en oeuvre facilitée), les caractéristiques mécaniques, et celles de séchage. Souvent, lorsqu'on utilise des liants hydrauliques, par exemple, on incorpore des polymères pour améliorer les caractéristiques de résistance mécanique, souplesse, et tenue à la déformation. S'il s'agit de liants hydrauliques, ce polymère est généralement sous forme de polymère en émulsion ou en dispersion (latex, par exemple). Cet additif représente dans les formulations un coût supplémentaire non négligeable que l'on cherche à réduire.

La question d'utiliser des bitumes en émulsion, connus pour être bon marché, s'est souvent posée, mais l'on s'est heurté à de grandes difficultés pour réaliser des formulations dans les domaines d'application visés par la demanderesse, car :

- il faut pouvoir disposer d'une émulsion de bitume stable sur une longue période, et notamment plus de six mois, avant de mélanger celle-ci avec les produits souvent pulvérulents, préformulés ou non, à l'état sec, c'est-à-dire que l'ensemble doit pouvoir être stocké sous forme de kit de composants ;
- les liants hydrauliques ou les charges minérales de la formulation floculent ou font floculer l'émulsion lors du mélange avec celle-ci ;
- les formulations à réaliser n'aboutissent pas aux caractéristiques souhaitées ou celles-ci sont trop complexes ou trop chères pour être retenues.

La demanderesse a donc cherché à obtenir des émulsions de bitume, pouvant répondre à ces objectifs, et présentant une aptitude d'incorporation universelle, sans rupture de l'émulsion, à des formulations, par exemple de construction, faciles à mettre en oeuvre, c'est-à-dire notamment sans problèmes de retard ou accélération de prise.

Les bitumes sont des mélanges d'hydrocarbures lourds essentiellement naphténiques et paraffiniques, issus de la distillation des pétroles bruts. Ces produits sont des résidus de distillation et sont classés par propriétés physiques, leurs propriétés chimiques variant très fortement en fonction de la provenance du brut. De manière générale, les bruts classiques contiennent jusqu'à 30% de bitume, et les lourds jusqu'à 50%. Les besoins en bitume de la plupart des pays représentant 2 à 4% de leur consommation de brut, ce qui fait que les disponibilités en bitume sont donc très élevées. Les bitumes contiennent une telle diversité de constituants qu'il est impossible de définir leur composition exacte, toutefois, il est possible de classer ces constituants en grandes familles chimiques :

- les saturés, constitués essentiellement de paraffiniques ;
- les aromatiques, dans lesquels 30% des atomes de carbone sont inclus dans des cycles aromatiques, avec une teneur en soufre d'environ 2 à 3% ;
- les asphaltènes, qui sont insolubles dans les hydrocarbures, aromatiques et riches en soufre, azote, et oxygène. Ils se présentent sous la forme de solides noirs, cassants et pratiquement infusibles.

Pour des bitumes donnés les pourcentages de ces différentes familles dépendent fortement de la méthode d'extraction utilisée. Ainsi les produits de ce type sont essentiellement classés par les propriétés physiques suivantes : pénétrabilité (NFT 66-004), point de ramollissement (NFT 66-008), densité (NFT 66-007), point éclair (NFT 60-118), solubilité (NFT 66-012), ductilité (NFT 66-006), point de fragilité. Les bitumes du commerce, classés en indice de pénétrabilité, sont généralement situés entre 10 et 200. Actuellement seules deux qualités sont émulsifiables à pression atmosphérique, les 80/100 et 180/220, mais il est possible, dans certains cas, d'émulsionner la qualité 40/50.

Comme tous les matériaux, le bitume est sensible à la fatigue, et donc sa résistance à la rupture peut baisser pour des répétitions de contraintes. Il comporte par contre une faculté d'autoréparation qui permet de limiter les effets destructeurs des phénomènes de fatigue. Il est connu d'améliorer les qualités de souplesse de certains bitumes en les mélangeant à des élastomères de synthèse, par exemple des polymères de styrène-butadiène ou polypropylène atactique.

Les émulsions de bitumes ont été développées pour la fabrication d'enrobés à froid, il y a environ 60 ans, et de nombreux articles et brevets décrivent la fabrication d'émulsions de bitume par l'association de plusieurs tensioactifs de nature différente. Les trois principaux types d'émulsions sont les suivants :

- les émulsions cationiques, dans lesquelles les tensioactifs sont constitués de molécules polaires de formule $R-NH_3^+ X^-$, R étant la chaîne hydrocarbonée constituant la partie lipophile de la molécule, et $NH_3^+ X^-$, la partie hydrophile, X- étant un anion quelconque d'un acide fort.
- les émulsions anioniques de formule générale $R-Y^- C^+$, R étant la chaîne hydrocarbonée constituant la partie lipophile, et $Y^- C^+$, la partie hydrophile, $Y^-$, étant un groupement carboxylique, sulfonique, sulfurique, phosphonique ou phosphorique, $C^+$, étant un cation métallique, souvent alcalin, ou ammonium ;
- des émulsions non ioniques, dans lesquelles les tensioactifs sont constitués de molécules de type $R-(EO)_n-OH$, dans lesquelles R est la chaîne hydrocarbonée constituant la partie lipophile de la molécule, la partie hydrophile étant constituée du radical $-(EO)_n-OH$ (EO signifiant oxyde d'éthylène). Les émulsions de bitume les plus fréquemment rencontrées sont cependant les émulsions cationiques ou anioniques.

Les tensioactifs utilisés pour réaliser ces émulsions sont choisis de manière à stabiliser l'émulsion pendant la durée du stockage, qui est souvent faible, par exemple de quelques semaines seulement, dans le cas des émulsions routières pour la réalisation d'enrobés à froid. De plus, il est souvent nécessaire d'ajouter des composants autres que les tensioactifs tels que des épaississants pour améliorer leur stabilité.

De manière générale, la réalisation de l'émulsion de bitume se fait à chaud en mélangeant à l'aide d'un disperseur, en continu ou en discontinu, les deux phases préchauffées (eau à 50°C, bitume de 140°C à 170°C), le tensioactif émulgateur pouvant être introduit préalablement dans la phase aqueuse ou la phase bitumineuse. Des exemples d'émulsions connues et obtenues de cette manière sont donnés ci-après dans le Tableau I :

TABLEAU I

| Emulsion anionique | Emulsion cationique |
|---|---|
| Bitume 80/100 : 55 % | Bitume 180/220 : 65 % |
| Dodécylbenzène sulfonate de sodium : 3 % | Propylène diamine de suif (Dinoram S) : 2 g/l |
| | Acide chlorhydrique jusqu'à pH = 2,0 à 2,5 |
| | Agent gélifiant (Nopco DSX 1550) : 1,75 g/l |
| eau : 42 % | eau : 35 % |

Les émulsions de bitume ainsi réalisées sont mises en oeuvre de manières très diverses. Par exemple, il est connu, dans le domaine routier, de "provoquer la rupture" de l'émulsion de bitume en y introduisant une faible quantité de ciment qui a pour seul effet de faire floculer le milieu et améliorer le départ de l'eau. Ces émulsions sont, en effet, formulées de manière à provoquer leur déstabilisation en présence de granulats ou de poudres minérales (e.g. silice, chaux, ciment). Les applications les plus courantes pour ces types d'émulsions sont les graves émulsions, les enrobés à froid, les coulis bitumineux, et les couches d'accrochage et d'imperméabilisation. Les applications autres que routières sont essentiellement des enduits d'étanchéité de barrages et de canaux en génie civil ainsi que les étanchéités de combles et de fondations pour les applications bâtiment.

Les tensioactifs cationiques (de même que les tensioactifs amphotères) sont inutilisables dans le cas où l'on souhaite mélanger l'émulsion de bitume et un liant hydraulique, tel qu'un ciment, basique par nature, car on provoque inévitablement la rupture de l'émulsion dans ce cas. Ainsi, les amines grasses oxyéthylées, les alkylimidazolines, et les alkylbétaïnes, sont par exemple des tensioactifs non utilisables pour la réalisation des émulsions selon la présente invention.

Les tensioactifs anioniques, comprenant les carboxylates, les sulfates, les sulfonates, les phosphates et les phosphonates, ne conviennent pas à la fabrication des émulsions de bitume destinées à être mélangées à un liant hydraulique. En particulier, les phosphates et les phosphonates provoquent des modifications d'hydratation du liant hydraulique et des retards de prise importants.

Les tensioactifs non ioniques connus utilisés dans ces émulsions offrent une grande diversité de formes et de natures chimiques : on distingue par exemple les alcools gras, les alkylphénols, les huiles végétales diverses, éthoxylées ou non, et les condensats d'oxydes d'éthylène et de propylène.

Des émulsions de bitume non-ioniques sont décrites dans les documents FR-A-2 246 509 et US-A-5 156 652. Le document US-A-5 156 652 décrit une combinaison possible de tensioactifs non-ioniques pour stabiliser une émulsion de bitume destinée à être transportée sur de grandes distances à travers des oléoducs. Les tensioactifs décrits sont essentiellement des alkylphénols éthoxylés, mais ceux-ci peuvent être utilisés en combinaison avec un copolymère bloc d'alcool éthoxylé et propoxylé, de formule suivante :

$$(CH_2\text{-}CH_2\text{-}O)_{10\text{-}125}\text{-}(CH_2\text{-}CHCH_3\text{-}O)_{25\text{-}30}\text{-}(CH_2\text{-}CH_2\text{-}O)_{10\text{-}125}\text{-}H$$

La demande de brevet français FR-A-2 246 509 décrit l'utilisation de tensioactifs non-ioniques pour la stabilisation d'émulsions d'asphalte, les tensioactifs pouvant être des alkylphénols éthoxylés en combinaison avec des polyéthylènealkyléthers de formule suivante :

$$C_8\text{-}C_{22}\text{-}Alkyle\text{-}O\text{-}(CH_2\text{-}CH_2\text{-}O)_{8\text{-}80}\text{-}H$$

Le brevet américain n° 3 432 320 propose une émulsion d'asphalte du type huile dans l'eau, consistant essentiellement en un asphalte, de l'eau et un émulsifiant non-ionique de formule générale :

$$R\text{-}O\text{-}(C_2H_4O)_x\text{-}(CH(CH_3)\text{-}CH_2\text{-}O)_y\text{-}(C_2H_4O)_z\text{-}H$$

dans laquelle :

R est choisi parmi l'hydrogène et les radicaux aryl, alkylaryl ; et
x, y et z sont des entiers, tels que (1) quand x vaut zéro, y vaut aussi zéro, z est dans la fourchette de 20 à 60 inclus, et R est un radical aryl ou alkylaryl, et (2), quand x et y sont chacun supérieurs à zéro, la somme de x et z est dans la fourchette de 50 à 350 inclus, et y est dans la fourchette de 40 à 60, inclus, et

l'émulsifiant non-ionique est le seul émulsifiant dans l'émulsion et cette dernière est du type non-ionique.

La demande de brevet japonais n° JP-A-01313593 propose une émulsion comprenant une huile ultra-lourde, de l'eau et un tensioactif non-ionique ayant une balance hydrophile-lipophile (HLB) de 14 à 19 et qui est choisi parmi les composés d'addition d'oxyde d'alkylène sur (a) un composé hydroxylé phénolique, (b) un condensé de formaline et d'un composé hydroxylé phénolique ou (c) un amine aliphatique ou un alcool aliphatique monohydrique, et les composés polymères séquencés ou statistiques d'addition d'oxyde d'éthylène avec de l'oxyde de propylène et/ou de l'oxyde de butylène ou de styrène.

Contrairement aux documents de l'art antérieur, la présente invention cherche à réaliser une émulsion aqueuse de bitume, de concentration élevée en bitume (50 à 70 %), non seulement stable pendant un temps de stockage pouvant aller au-delà de six mois, mais pouvant être incorporée dans des formulations diverses, par exemple comprenant un ou plusieurs liants minéraux ou organiques, et/ou une ou plusieurs charges minérales ou organiques, sans provoquer de floculation,
ou de rupture de l'émulsion, lors de l'opération de mélange des différents constituants, et sans modifier la prise ou la rhéologie du mélange. Les émulsions selon l'invention sont caractérisées par le fait qu'elles possèdent une très grande stabilité facilitant ainsi leur stockage pendant plusieurs mois, et lors du mélange avec les autres constituants d'une formulation, par exemple avec un liant hydraulique, la formulation demeure homogène et de mise en oeuvre facile et rapide, ce qui confère aux émulsions selon l'invention un caractère quasi-universel, en termes d'applications possibles.

L'émulsion de bitume ainsi constituée confère alors aux mélanges où elle est incorporée, des propriétés particulières telles que par exemple l'adhérence, la souplesse, l'étanchéité, ces propriétés étant jusqu'alors obtenues à l'aide de polymères en dispersion ou sous forme redispersable en poudre.

Ainsi, un objet de la présente invention est une émulsion aqueuse de bitume comprenant un tensio-actif, 0 à 5 % d'épaississant, 0 à 1 % d'anti-mousse, qsp 100 % d'eau, caractérisée en ce que le bitume est dans la proportion pondérale de 50 à 70 %, et le tensio-actif dans la proportion de 0,5 à 10 %, et consiste en un copolymère d'oxyde d'éthylène et d'oxyde de propylène, de rapport molaire OP/OE compris entre 1,5 et 10.

Dans la description et les revendications de la présente invention, on entend par "rapport OP/OE", le rapport molaire des groupements OP/OE, soit le nombre de groupements OP (oxyde de propylène) sur le nombre de groupements OE (oxyde d'éthylène).

De préférence, la masse moléculaire du copolymère d'oxyde d'éthylène et d'oxyde de propylène est comprise entre 1000 et 2200, et de préférence est 2000. Par comparaison, la masse moléculaire du copolymère bloc décrit dans le document US-A-5 156 652 est comprise entre 2350 et 12750.

Les copolymères utilisés en tant que tensioactif dans les émulsions de bitume selon l'invention, et tels que définis précédemment, ne provoquent pas de formation de mousse lors de la préparation de l'émulsion, ce qui facilite la préparation de celle-ci. Par ailleurs, lorsque les émulsions contenant ces copolymères sont utilisées pour préparer des compositions contenant un liant hydraulique, ils ne provoquent ni de retard, ni d'accélération de prise dudit liant.

De manière préférentielle, et afin d'augmenter l'efficacité du copolymère défini précédemment, l'émulsion peut comporter un tensioactif supplémentaire jouant le rôle d'hydrotrope. Avantageusement, le tensioactif supplémentaire est choisi dans le groupe consistant en les tensioactifs non ioniques suivants :

- les alkylphénols polyéthoxylés de valeur HLB comprise entre 13 et 17, et en particulier choisi dans le groupe consistant en les nonylphénols 10 OE à 20 OE et le tributylphénol 11 OE à 30 OE ;
- les alcools gras polyéthoxylés de valeur HLB comprise entre 12 et 15, par exemple, l'isotridécanol 8 OE, le décanol 8 OE, le tridécanol 10 OE, et le dodécanol 7 OE.

De manière inattendue, le déposant de la présente invention a découvert que les alkylphénols polyéthoxylés de valeur HLB comprise entre 13 et 17 donnent les meilleurs résultats. Par conséquent, et de préférence, le tensioactif supplémentaire est un alkyphénol polyéthoxylé de valeur HLB comprise entre 13 et 17.

La valeur HLB (en anglais "hydrophilic-lipophilic balance"), peut être calculée à l'aide la formule selon Griffin, soit :

$$HLB = 20 \times m\,OE/m\,T$$

où m OE représente la masse totale des oxydes d'éthylène et m T la masse totale de la molécule.

Tous les tensioactifs non ioniques décrits précédemment présentent en outre l'avantage de ne perturber que peu les caractéristiques d'hydratation des ciments, lorsque les émulsions contenant ces tensioactifs sont utilisées pour formuler ce type de composition.

Dans un mode d'exécution préféré, le tensioactif de l'émulsion bitumineuse est un mélange d'un copolymère constitué d'un copolymère d'oxyde d'éthylène et d'oxyde de propylène de rapport OP/OE compris entre 1,5 et 10 et présentant une masse moléculaire d'environ 2000, et d'un nonylphénol 10 OE à 20 OE.

Dans ce cas, et de préférence, les pourcentages préférés du tensioactif constitué du copolymère d'oxyde d'éthylène et d'oxyde de propylène, tel que défini précédemment, en mélange avec le nonylphénol 10 OE à 20 OE (oxyde d'éthylène), sont de 0,7 % à 5 %, et de 0,1 % à 1 % respectivement. En effet, ce mélange binaire de deux tensioactifs non ioniques s'avère être le plus efficace pour réaliser des émulsions de bitume stables, destinées à être mélangées à des liants hydrauliques.

Malgré la faible concentration en tensioactif nécessaire pour obtenir la stabilité de l'émulsion (environ 0,5 % en poids), il s'est avéré important d'utiliser des concentrations plus élevées dans des compositions de mortier, afin d'éviter la floculation dans celles-ci. En effet, lorsque les émulsions selon la présente invention sont utilisées dans des compositions de mortier, on préfère utiliser dans l'émulsion au moins 3 % du copolymère, avec un rapport de copolymère/tensioactif non-ionique supplémentaire compris entre 5 et 7.

Un autre objet de la présente invention est un procédé de fabrication d'une émulsion de bitume telle que définie précédemment, le procédé étant caractérisé en ce qu'il comprend les étapes consistant à :

- préparer la phase aqueuse, de préférence à l'aide d'un épaississant incorporé dans l'eau sous agitation ;
- ajouter à la phase aqueuse un tensioactif constitué d'au moins un tensioactif choisi dans le groupe consistant en un copolymère d'oxyde d'éthylène et d'oxyde de propylène de rapport OP/OE compris entre 1,5 et 10, un tensioactif époxydé éthoxylé et/ou propoxylé, et un alcool polyvinylique de masse moléculaire comprise entre 10000 et 150000 ;
- chauffer la phase aqueuse à environ 60°C ;
- incorporer le bitume préalablement chauffé entre 140°C à 180°C, dans la phase aqueuse sous forte agitation mécanique.

Dans le cas d'une formation de mousse, un additif antimousse peut être utilisé avant, pendant ou après incorporation de la phase bitumineuse.

Encore un autre objet de l'invention est une composition à base d'au moins un liant hydraulique ou organique, et/ou à base d'au moins une charge minérale ou organique, contenant une émulsion de bitume selon la définition donnée précédemment.

Encore un autre objet de la présente invention est l'utilisation d'une émulsion de bitume aqueuse pour la formulation d'une composition choisie dans le groupe consistant en les mortiers, les mortiers-colle, les enduits de façade, les enduits de ragréage, les peintures, les bétons, les primaires d'accrochage, les primaires d'imperméabilisation, les joints de chaussée, et les mortiers de scellement, l'émulsion comprenant, exprimés en pourcentages du poids total de l'émulsion :

- 50 % à 70 % de bitume ;

- 0,5 % à 10 % de tensioactif
- qsp 100% d'eau,

    et étant caractérisée en ce que le tensioactif est constitué d'au moins un tensioactif nonionique choisi dans le groupe consistant en
- les alkylphénols polyéthoxylés de valeur HLB comprise entre 13 et 17;
- les copolymères d'OE et d'OP ;
- les alcools gras polyéthoxylés de valeur HLB comprise entre 12 et 15 ;
- les tensioactifs époxydés éthoxylés et/ou propoxylés ;
- et les alcools polyvinyliques de masse moléculaire comprise entre 10000 et 150000.

Enfin un autre objet de la présente invention est un kit de matériaux de construction, comprenant d'une part une émulsion de bitume telle que définie ou utilisée précédemment, ou obtenue selon le procédé défini précédemment, et d'autre part au moins un liant hydraulique ou organique, et/ou au moins une charge minérale ou organique.

De préférence, le bitume est choisi parmi les bitumes émulsifiables à pression atmosphérique, tels que les qualités de 40 à 220 en indice de pénétrabilité (dixièmes de millimètre de pénétration). Les qualités désasphaltées ou de synthèse, de même que les mélanges plastifiés à l'aide de polymères, peuvent également être utilisés pour des applications particulières, les qualités de synthèse étant intéressantes du fait de la possibilité de les pigmenter.

Les épaississants sont de préférence choisis parmi les polysaccharides tels que les épaississants cellulosiques, les gommes végétales (par exemple, la gomme de caroube, la gomme de guar, la gomme d'adragante, la gomme de karaya, l'amidon, les alginates, la gomme arabique), les gommes produites par fermentation bactérienne (la gomme de xanthane, la gomme de welan), ainsi que les argiles gonflantes (par exemple, l'atapulgite, la sépiolite, la bentonite). D'autres épaississants de type synthétique peuvent éventuellement être utilisés pour ajuster la rhéologie des suspensions tels que les polymères acryliques associatifs ou non et les polyuréthanes. Il s'est avéré que la gomme de welan ne provoque pas de formation sensible de mousse, contrairement aux autres gommes, et pour cette raison elle est l'épaississant préféré pour les émulsions selon la présente invention.

Un antimousse peut être éventuellement incorporé à l'émulsion pour éviter la formation de mousse et faciliter l'incorporation du bitume. Les additifs antimousse sont choisis parmi les produits connus de l'homme de l'art tels que, par exemple, les mélanges de silice et d'huile minérale, les polysiloxanes, le tributylphosphate, et les savons métalliques.

De préférence, le liant hydraulique est constitué d'au moins un liant hydraulique choisi dans le groupe consistant en un ciment de Portland ou équivalent, un ciment alumineux, et un sulfate de calcium.

Dans un mode d'exécution préféré de l'invention, le liant organique est constitué d'au moins un liant polymère, choisi dans le groupe consistant en les styrènes butadiènes, les copolymères acryliques, et les éthylène polyvinylacétates.

Préférentiellement, la charge minérale est constituée d'au moins une charge généralement inerte de type habituellement utilisée dans les formulations de l'industrie du bâtiment et du génie civil, choisie dans le groupe consistant en le sable, les agrégats, la silice, les carbonates de calcium, les silicates de calcium, les sulfates de baryum, le talc, le mica.

De manière préférée, la charge organique est constituée d'au moins une charge organique choisie dans le groupe consistant en les fibres polymères, les fibres de cellulose, et/ou les billes de polystyrène.

L'invention sera mieux comprise en se référant à la description détaillée de quelques modes d'exécution préférés, donnés à titre illustratif uniquement, et en se référant au dessin en annexe, dans lequel :

- **la Figure 1** représente un graphique montrant l'évolution des temps de début et fin de prise d'un mortier à base de ciment alumineux ou de ciment Portland contenant un pourcentage variable de copolymère OE/OP ;
- **la Figure 2** représente un graphique de courbes d'hydratation d'un mortier à base de ciment Portland contenant un pourcentage variable de copolymère OE/OP ;
- **la Figure 3** représente un graphique montrant l'hydratation observée par diffraction des rayons X d'un mortier à base de ciment Portland contenant un pourcentage variable de copolymère OE/OP ;
- **la Figure 4** représente un graphique de courbes d'hydratation d'un mortier à base de ciment alumineux contenant un pourcentage variable de copolymère OE/OP ;
- **la Figure 5** représente un graphique montrant l'hydratation observée par diffraction des rayons X d'un mortier à base de ciment Portland contenant un pourcentage variable de copolymère OE/OP ;
- **la Figure 6** représente un graphique montrant les résistances en flexion d'un mortier à base de ciment Portland contenant un pourcentage variable de copolymère OE/OP ;
- **la Figure 7** représente un graphique montrant les résistances en compression d'un mortier à base de ciment Portland contenant un pourcentage variable de copolymère OE/OP ;
- **la Figure 8** représente un graphique montrant les résistances en flexion d'un mortier à base de ciment alumineux contenant un pourcentage variable de copolymère OE/OP ;

- **la Figure 9** représente un graphique montrant les résistances en compression d'un mortier à base de ciment alumineux contenant un pourcentage variable de copolymère OE/OP ;

**EXEMPLES :**

Quelques exemples d'émulsions de bitume stabilisées selon l'invention sont donnés ci-après dans le Tableau II à titre indicatif, tous les pourcentages étant exprimés par rapport au poids total de l'émulsion. Les émulsions ont été obtenues en procédant de la manière suivante :

- on prépare la phase aqueuse ;
- on ajoute ensuite à la phase aqueuse, un tensioactif constitué d'au moins un copolymère d'oxyde d'éthylène et d'oxyde de propylène de rapport OP/OE compris entre 1,5 et 10, par exemple celui commercialisé sous la dénomination LC 818 C, par la société Sidobre Sinnova ;
- on chauffe la phase aqueuse à environ 60°C ;
- on incorpore le bitume préalablement chauffé à 140°C, dans la phase aqueuse, sous forte agitation mécanique, par exemple à l'aide d'un disperseur rapide du type Rainery, muni d'une pale défloculeuse, à une vitesse de rotation de 800 t/min.

L'émulsion présente une taille micellaire comprise entre 0,5 $\mu$m et 15 $\mu$m.

TABLEAU II

|  | | Exemple 1 | Exemple 2 |
|---|---|---|---|
| 1 | | Bitume Viatotal 80/100<br>60 % | Bitume Viatotal 80/100<br>65 % |
| 2 | | LC 818 C<br>3% | LC 818 C<br>3,5% |
| 3 | | Kelcocrete K1C376<br>0.1 % | Esacol ED 10<br>0,2 % |
| 4 | | | Rhodoline DF 6681<br>0,1 % |
| 5 | | Eau<br>36,9 % | Eau 31,<br>2 % |
| 1 : Bitume Viatotal disponible auprès de la société Total Raffinage, Division des Bitumes.<br>2 : (Tensioactif Non-ionique) : LC 818 C, disponible auprès de la société Sidobre Sinnova.<br>3 : (Epaississant) : Kelcocrete K1C376 (gomme de welan) disponible auprès de la société Monsanto.<br>3 : (Epaississant) : Esacol ED 10 (gomme de guar) disponible auprès de la société Lamberti.<br>4 : (Antimousse) : Rhodoline DF 6681 disponible auprès de la société Rhodia. | | | |

En termes d'applications industrielles, les émulsions de bitume selon l'invention peuvent donner lieu à un grand nombre d'applications en combinaison ou non avec au moins un liant hydraulique minéral ou organique et/ou au moins une charge minérale ou organique. A titre de liants hydrauliques, on peut citer par exemple les ciments Portland, et alumineux, les ciments à base de laitier, et le sulfate de calcium. Par ailleurs, les caractéristiques de souplesse et de ductilité des émulsions selon la présente invention les rendent adaptées à remplacer un grand nombre de polymères en dispersion dans des compositions très variées avec un coût très inférieur.

Les émulsions ainsi réalisées peuvent notamment être utilisées dans les applications suivantes :

- les primaires d'accrochage pour mortiers de sols et enduits de lissage ou de façade,
- les primaires d'imperméabilisation,
- les colles pour revêtements synthétiques (moquette, dalles PVC etc...) de sols et murs,
- les colles en pâtes pour carrelage,
- les revêtements plastiques épais et les peintures mates chargées,
- les revêtements anticorrosion pour supports métalliques,
- les compositions à base de liants hydrauliques, tels que ciments, plâtres, anhydrite et leurs mélanges, notamment mortiers colles, enduits de façade, mortiers et enduits spéciaux, tels que mortiers d'imperméabilisation, joints de chaussée, mortiers de scellement pour voirie, mortiers de sols et chapes, enduits de lissage, enduits de ragréage,
- les bétons et revêtements routiers.

Les émulsions de bitume selon l'invention peuvent, notamment, être utilisées pour la réalisation de compositions à base de liants mixtes : liants hydrauliques - liants hydrocarbonés, plus particulièrement pour graves et sables pour assises de chaussées, pour les sols et machefers d'incinération des ordures ménagères pour utilisation en remblais, et pour les couches de forme et assises de chaussées. Les émulsions selon l'invention conviennent aussi pour l'obtention de produits à froid de substitution des enrobés à chaud, pour couches de roulement de routes. En pareil cas, l'émulsion de bitume selon l'invention représente de 0,5 à 6 % en poids de la composition.

Du fait des possibilités de stockage sur longue durée de l'émulsion selon l'invention et du fait de sa parfaite compatibilité et homogénéité, et de l'absence d'influence sur la prise des liants hydrauliques type ciment Portland ou équivalent, le mélange de compositions à base de ces liants mixtes pour les applications routières peut s'effectuer dans un seul et même malaxeur, soit en centrales à graves-ciment ou à sol classiques sur chantier, soit en centrales distantes de ce chantier.

En particulier, les émulsions de bitume selon l'invention peuvent être avantageusement appliquées dans des procédés utilisés habituellement en France tels que Flexocim ® (Cf. EP 545 740) de la Société Beugnet, ou Stabicol ® (Cf. EP 535 282), de la Société Colas, et ce, grâce à cette simplification des étapes de mélange et/ou de logistique d'approvisionnement en composition pour graves.

**Exemple 1 :**

Afin de démontrer les propriétés des émulsions bitumineuses selon l'invention dans des formulations contenant une charge minérale ou organique, une série de tests a été effectuée sur un mortier bitume-ciment contenant une émulsion selon l'invention présentant une concentration en bitume (70/100 pigmentable de Shell) de 60 % en poids, à raison de 5 % en poids du ciment, avec 0,1 % de gomme de welan en tant qu'épaississant, et contenant comme tensioactifs un copolymère d'oxyde de propylène et d'oxyde d'éthylène de poids moléculaire environ égal à 2000, à raison de 5 % en poids du bitume. Le mortier était constitué comme suit :

- sable normal     1350 g
- ciment Portland     450 g
- émulsion de bitume     300 g
- eau     à consistance

Le taux de gâchage eau/ciment (E/C) était de 0,8. L'émulsion de bitume a été versée préalablement dans un malaxeur Perrier, et puis le ciment et le sable ont été ajoutés successivement sous agitation. Le mélange est éventuellement ajusté en eau pour permettre un gâchage correct.

Une composition de mortier semblable a également été réalisée contenant une quantité similaire de ciment fondu.

La stabilité des système a été appréciée de manière visuelle en contrôlant l'homogénéité du mélange et l'absence de toute floculation. L'émulsion est stable au stockage pendant plus de 6 mois.

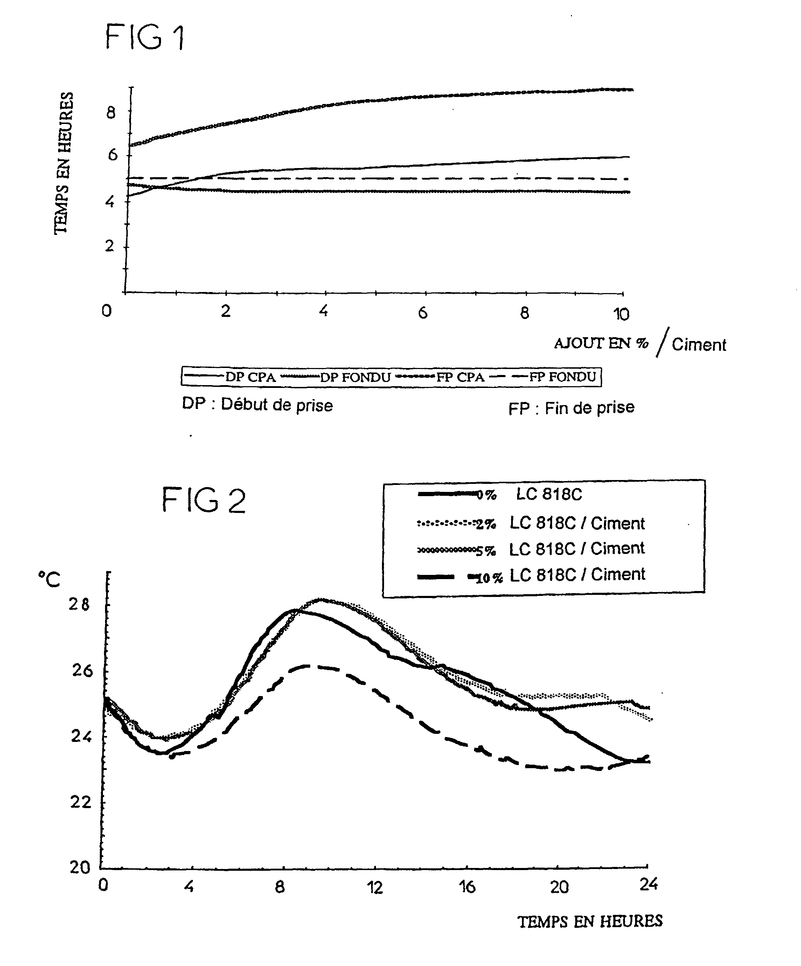

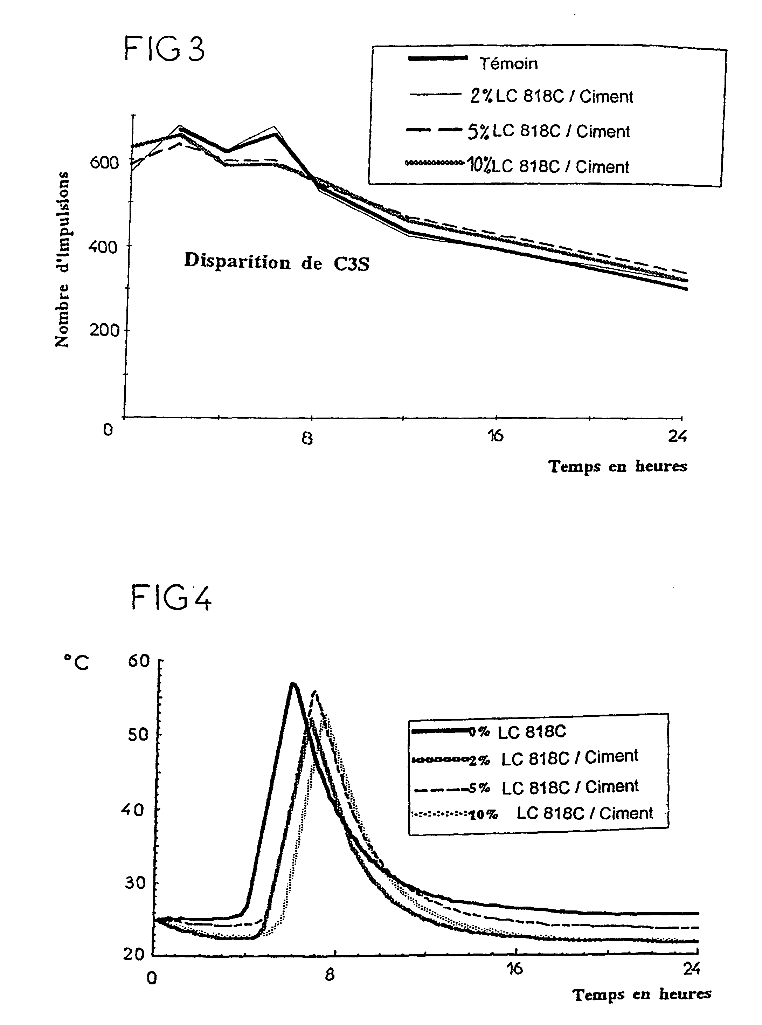

Les mortiers ont ensuite été analysés pour déterminer l'effet du tensioactif, à différentes quantités d'incorporation dans l'émulsion, sur le temps de prise, et l'hydratation suivie par diffraction des rayons X. Pour effectuer des suivis d'hydratation par analyse en diffraction des rayons X, il est nécessaire de dissoudre au préalable le bitume à l'aide d'un solvant. Ceci peut être réalisé avec de l'heptane ou du white spirit sans provoquer de différence par rapport à un lavage traditionnel à l'acétone. Les résultats sur le temps de prise et l'hydratation sont illustrés par les graphiques des Figures 1, et 2 à 5 respectivement. Ces figures montrent en effet que le tensioactif copolymère choisi n'a quasiment pas d'influence sur l'hydratation des mortiers à base de ciment Portland et fondu.

**Exemple 2 :**

Par ailleurs, et afin de déterminer l'influence des tensioactifs selon l'invention entrant dans une composition comprenant une charge minérale ou organique, sur les propriétés mécaniques desdites compositions, des mortiers semblables aux mortiers précédemment décrits ont été réalisés, à base de ciment Portland ou ciment fondu. Les mortiers ont été mis en place par damage dans des moules en polystyrène. Les compositions étaient les suivantes :

- sable normal     1350 g     sable normal     1350 g
- ciment Portland     450 g     ciment fondu     450 g
- antimousse     4,5 g     antimousse     4,5 g

**-** taux E/C  0,5  taux E/C  0,45

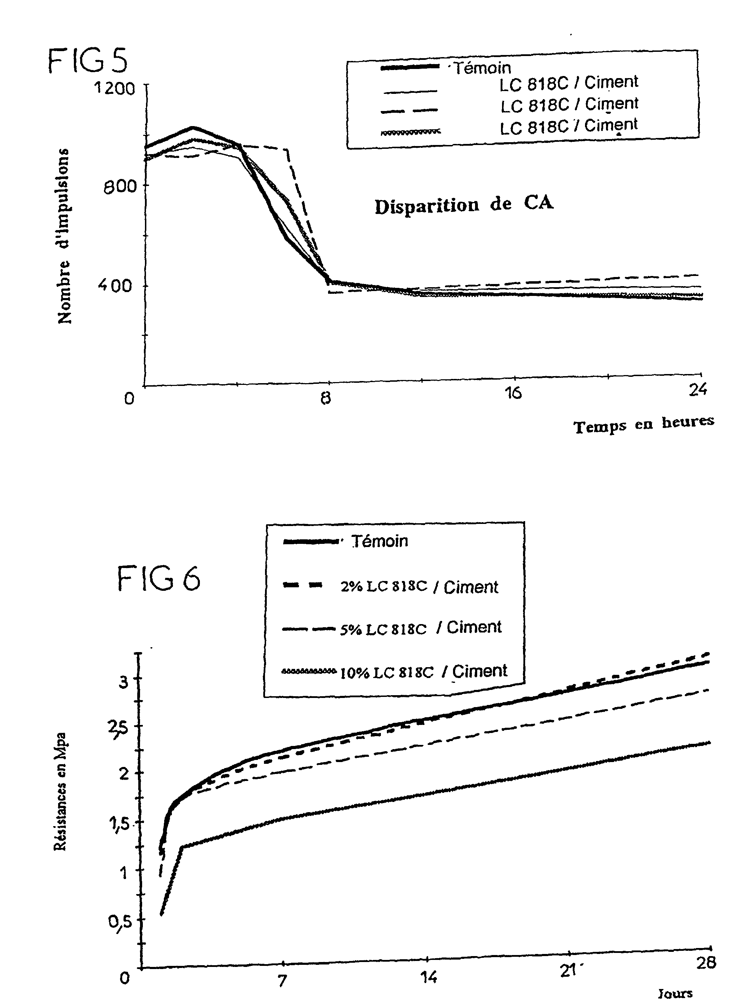

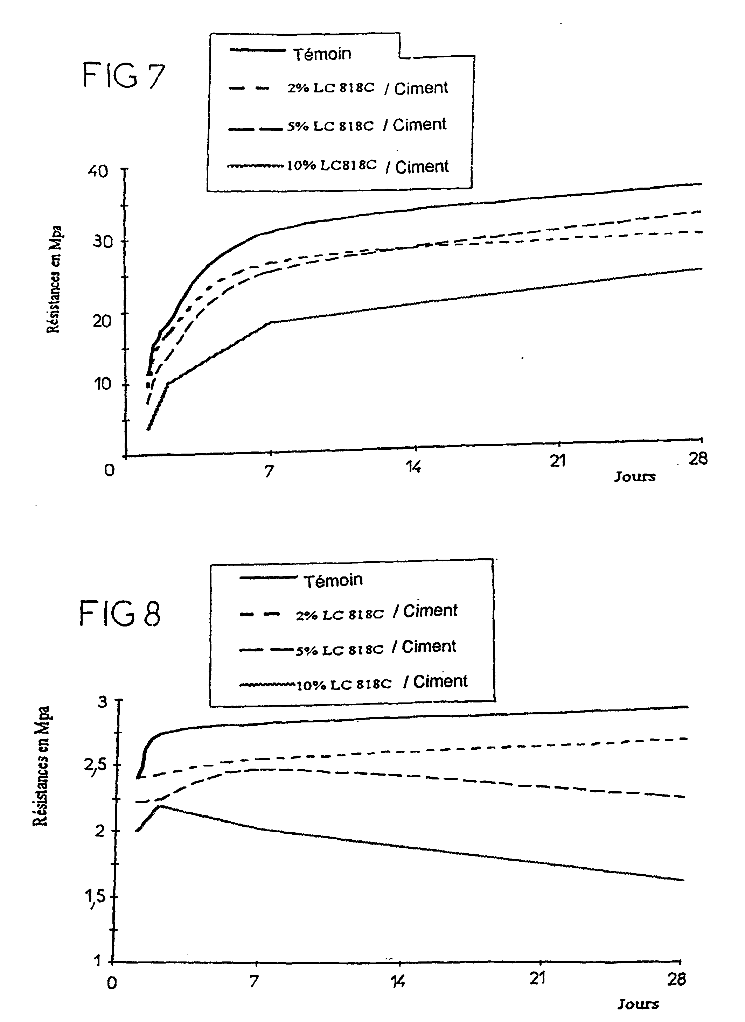

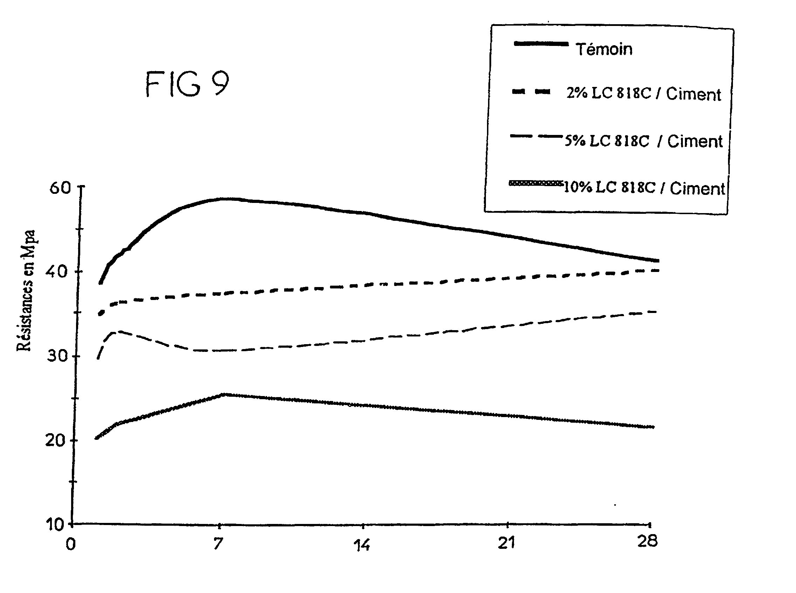

Les propriétés mécaniques ont été suivies en flexion trois points et en compression aux différentes échéances, et les résultats sont reportés sur les graphiques des Figures 6 à 9. On constate qu'à des taux relativement faibles, le tensioactif choisi n'a pas d'influence importante sur les propriétés mécaniques.

## Exemple 3 :

Les émulsions de bitume selon la présente invention sont en outre compatibles avec la plupart des dispersions de polymères du marché et peuvent être utilisées en mélange ou non avec elles. Ainsi, et afin de déterminer la compatibilité des émulsions selon l'invention dans des compositions comprenant un liant organique, tel que des polymères, le déposant a réalisé des mélanges de latex de natures différentes et d'émulsions de bitume contenant le tensioactif choisi.

L'émulsion de bitume utilisée pour ces essais a été réalisée à l'aide d'un bitume pigmentable 70/100 disponible auprès de la société Shell. Le système tensioactif était un mélange de 3,5 % en poids de copolymère et de 0,5 % en poids de nonylphénol 15 OE. L'épaississant était la gomme de welan, à raison de 0,05 % en poids. Tous les pourcentages en poids donnés sont par rapport au poids total de l'émulsion. Les polymères et le bitume ont été mélangés dans des proportions massiques équivalentes, la stabilité étant contrôlée de manière visuelle à la température de 20°C.

Les polymères testés sont les suivants :

**-** un styrène acrylique (Rhodopas DS 910, Rhodia) ;
**-** un styrène butadiène (Rhodopas SB 112, Rhodia) ;
**-** un copolymère acrylique (Primai 2727, Rohm & Haas) ;
**-** un éthylène vinylacétate (Vinnapas CEP 15, Wacker).

Aucun problème n'a pu être observé lors du mélange des polymères avec l'émulsion de bitume. Le mélange réalisé était homogène et est resté parfaitement stable sans séparation de phases ou de floculation.

S'agissant d'émulsions fabriquées à partir d'alcool polyvinylique et de tensioactif expoxydé, les exemples A et B sont donnés ci-après dans le Tableau III :

Tableau III

|  |  | Exemple A | Exemple B |
|---|---|---|---|
|  | 1 | Bitume Viatotal 80/100 56 % | Bitume Viatotal 80/100 50 % |
|  | 2 | Airvol 540S 2,4 % | Prox E 141 4,5% |
|  | 3 | Esacol ED 10 0,1 % |  |
|  | 4 |  | Tributylphosphate 0,2 % |
|  | 5 | Eau 41,5 % | Eau 4 5,3 % |

1 : Bitume Viatotal disponible auprès de la société Total Raffinage, Division des Bitumes.
2 : Prox E141 : tensioactif epoxydé et propoxylé : disponible auprès de la société Protex ; Airvol 540S : alcool polyvinylique : disponible auprès de la société Air Product.
3 : Epaississant : Esacol ED 10 disponible auprès de la société Lamberti.
4 : Antimousse : Tributylphosphate disponible auprès de la société Protex.

## Exemple 4 :

Des essais de stabilité au gel ont été effectués en portant successivement les émulsions de bitume selon l'invention à des températures de 0°C puis - 5°C pendant 3 jours pour chaque essai. Les deux émulsions testées ont été réalisées à partir de bitume 70/100 de Total pour la première et de 70/100 pigmentable de Shell pour la seconde, le système stabilisant utilisé était le même que pour l'exemple précédent. Les émulsions testées ne se solidifient pas et présentent une excellente stabilité, aucune floculation n'ayant été constatée. Le retour à la température ambiante (20°C) ne montre pas de problème particulier.

**Exemple 5 :**

Afin de vérifier la faisabilité d'un système polymère chargé de type crépi plastique, des RPE (Revêtement Plastique Epais) ont été réalisés à l'aide de dispersion de polymère et de mélanges de dispersion de polymère et d'émulsion de bitume selon l'invention, pour la partie liante.

La formule retenue est la suivante :

| | |
|---|---|
| Ether de cellulose (Tylose MHEC 10000, Sté. Clariant) | 2,5 |
| Biocide (Troysan 186, Sté. Troy) | 0,2 |
| Eau | 49,0 |
| Solution d'ammoniac à 28% | 1,1 |
| Dispersant (Dispex A40, Sté. Allied Colloids) | 2,7 |
| Antimousse (Nopco 8034, Sté. Henkel Nopco) | 2,0 |
| Dioxyde de titane (Tioxide RHD2, Sté Tioxide) | 61,5 |
| CaCO3 (Mikhart 40, Sté. Provençale de Travaux) | 144 |
|     (Mikhart 130) | 91,8 |
| Silice (BE 31, Sté. Sifraco) | 297,5 |
| Granulats siliceux (16/14/3 silice et kaolin) | 123 |
| Liant en sec | 102,5 |
| Eau (incorporée avec le liant) | 102,5 |
| Agent de coalescence (Butyldiglycol) | 15,5 |
| Epaississant (Rheo 3000, Sté. Coatex) | 4,2 |

Une formule témoin a été réalisée en utilisant une dispersion de styrène acrylique comme liant, le polymère choisi étant le Rhodopas DS 1029 de Rhodia.

Des essais ont été effectués pour lesquels le liant polymère a été partiellement substitué par l'émulsion de bitume. Pour ce faire, une émulsion réalisée à l'aide de bitume 70/100 de Total, et une émulsion de bitume pigmentable (70/100 Shell) de concentration en bitume de 60% ont été choisies. Le système tensioactif retenu était constitué de 3,5 % de copolymère, 0,5 % de nonylphénol 15 OE et l'épaississant était la gomme de welan à raison de 0,05%.

La formule était réalisée de la manière suivante :

-   l'eau, l'ammoniaque, l'éther de cellulose, le biocide, l'agent dispersant et l'antimousse ont été incorporés dans un bêcher en acier inoxydable et maintenus sous agitation à 1500 tours par minute pendant 30 minutes,
-   le pigment et les charges ont été alors introduits dans la solution et maintenus sous agitation jusqu'à dispersion complète (environ 30 minutes),
-   le liant a été ensuite alors ajouté à la dispersion (latex et/ou émulsion de bitume) et le système homogénéisé pendant 10 minutes,
-   on a incorporé ensuite l'agent de coalescence et puis l'épaississant.

On n'observe pas de problème particulier quant à la stabilité des mélanges.

**Exemple 6 :**

Des essais ont été effectués également sur des peintures anticorrosion pour bâtiment en utilisant un système liant de type dispersion de polymère, dans lequel le polymère a été partiellement substitué par une émulsion de bitume.

La formule retenue était la suivante :

| | |
|---|---|
| Eau | 464 |
| Solution d'ammoniac à 28% | 1 |
| Dispersant (Dispex A40, Sté. Allied Colloids) | 0,5 |
| Pigment anticorrosion | |
|     (Actirox 213, Sté. Colores Hispania) | 87 |

(suite)

| Pigment anticorrosion | |
|---|---|
| Charge (Micarvor 20, Sté. Kaolins d'Arvor) | 87 |
| Oxyde de fer (Bayferrox 303T, Sté. Bayer) | 29 |
| Antimousse (Nopco 8034, Sté. Henkel Nopco) | 3,5 |
| Liant en sec | 291,5 |
| Agent coalescent (Butyldiglycol) | 29 |
| Epaississant (Rheo 2100, Sté. Coatex) | 7,5 |

La partie liante était constituée d'une dispersion styrène acrylique pour le témoin (Acronal 290 D de BASF) et deux essais ont été réalisés à l'aide d'émulsion de bitume en substituant 50% du liant sec dans le premier cas et la totalité dans le second cas. L'émulsion de bitume retenue était une émulsion de bitume pigmentable (70/100 Shell) à 60% contenant 3,5 % de copolymère, et 0,5 % de nonylphénol 15 OE, avec 0,05% de gomme de welan en tant qu'épaississant.

Le mode de préparation appliqué était le suivant :

- une pâte mère a été réalisée avec l'eau, l'agent dispersant, les pigments et la charge, en maintenant l'ensemble sous agitation dans un bêcher en acier inoxydable à la vitesse de 2000 tours par minute,
- le liant a été alors incorporé sous agitation et l'ensemble est homogénéisé,
- l'ammoniaque, l'antimousse, le coalescent et l'épaississant ont été alors ajoutés au mélange en dernier lieu.

Les formules ainsi obtenues ont été appliquées sur des tôles d'acier dégraissé puis séchées dans les conditions du laboratoire (23°C, 50 % d'humidité relative) pendant 1 semaine. Les plaques ont été alors entaillées et soumises à un test de brouillard salin (norme ISO 9227) pendant 100h.

A l'issue du test les plaques ont été rincées à l'eau et un test visuel pratiqué pour rendre compte de la corrosion (largeur de rouille à l'entaille, cloquage et corrosion sur plein champ).

Les résultats obtenus sont les suivants :

Témoin : largeur de rouille à l'entaille : 2 mm, cloquage important, corrosion sur plein champ faible.

Substitution de 50% de liant par du bitume : largeur de rouille à l'entaille : 2 mm, cloquage faible, corrosion sur plein champ moyenne.

Substitution de 100% de liant par du bitume : largeur de rouille à l'entaille : 5 mm, cloquage faible, corrosion sur plein champ très importante.

La substitution de la totalité du liant polymère par une émulsion de bitume provoque une augmentation des phénomènes de corrosion, mais le remplacement partiel du liant par l'émulsion de bitume montre par contre des résultats similaires au témoin après le test de brouillard salin.

## Exemple 7 :

Afin de vérifier la compatibilité des émulsions de bitume avec les fluidifiants utilisés dans certaines formulations de mortiers, un essai a été réalisé sur une formule contenant un fluidifiant de type polymélamine formol sulfonate de sodium.

La formule retenue était la suivante :

| émulsion de bitume | 150 g |
|---|---|
| antimousse : Nopco 8034 | 4,4 g |
| ciment CPA CEM 1 52,5 R de St Pierre la Cour | 450 g |
| Sable normal | 1350 g |
| eau | 171 g |

L'émulsion de bitume retenue était la même que pour l'exempte 5. Pour fluidifier le mortier, 1 % de fluidifiant (Melment F10) par rapport à la poudre a été incorporé au mélange. Les formules ont été gâchées à l'aide d'un mélangeur Perrier à faible vitesse pendant 2 minutes. Afin de mesurer la fluidité des mélanges, des étalements ont été réalisés à l'aide d'un cône ASTM (petit diamètre 70 mm, grand diamètre 100 mm, hauteur 50 mm).

Les résultats obtenus sont les suivants :

Témoin : étalement de 100 mm
Mortier fluidifié : étalement de 210 mm

On a remarqué que l'émulsion de bitume ne perturbait pas l'action du fluidifiant. D'autre part, la compatibilité avec le polymère fluidifiant est bonne et on n'a pu observer aucun problème de floculation. Il est possible d'utiliser des émulsions de bitume selon l'invention dans des formules fluidifiées telles que ragréages de sol, chapes, colle, mortiers spéciaux.

**Exemple 8 :**

Comme pour l'exemple 5, un RPE a été réalisé à l'aide d'un mélange de dispersion de polymère et d'émulsion de bitume, et présentant la formule suivante :

- éther de cellulose
     (Tylose MHEC 10000, Sté. Clairant)        2,5
- biocide (Troysan 186, Sté Troy)        0,2
- eau        49
- solution d'ammoniac à 28%        1,1
- dispersant
     (Dispex Ato, Sté Allied Colloids)        2,7
- antimousse
     (Nopco 8034, Sté Henkel Nopco)        2,0
- dioxyde de titane
     (Tioxide RHD2, Sté Tioxyde)        61,5
- CaC03
     (Mikhart 40, Sté Provençale de Travaux)        144
     (Mikhart 130, Sté Provençale de Travaux)        91,8
- silice (BE 31, Sté Sifraca)        297,5
- granulats siliceux (16/14/3 silice et kaolin)        123
- liant en sec        102,5
- eau (incorporée avec liant)        102,5
- agent de coalescence (butylglycidol)        15,5
- épaississant (Rheo 3000, Sté Coatex)        4,2

La formule témoin est la même que dans l'exemple 5, le polymère choisi étant le Rhodopos DS 1029 de Rhodia.

Comme précédemment une émulsion a été réalisée à l'aide de bitume pigmentable 70/100 de Shell avec une concentration en bitume de 60%. Le tensioactif utilisé dans l'émulsion est un nonylphénol 15 OE à une concentration de 3%, et on ajoute également de la gomme de wélan à raison de 0,05% en tant qu'épaississant, et un antimousse (par exemple le Nopco 8034) à raison de 1%.

La formule a été réalisée de la même manière que dans l'exemple 5. Des essais ont été effectués en substituant le liant polymère par l'émulsion de bitume à raison de 20%. Aucun problème de formulation ni d'incompatibilité n'a pu être observé.

**Exemple 9 :**

Un mortier colle est réalisé à l'aide de ciment Portland selon les formules suivantes :

**FORMULE A**

- ciment Portland        350 g
- sable        590 g
- éther de cellulose
     (Culminal MHEC 15000 PFF Sté Aqualon)        3 g
- antimousse (Nopco 8034, Sté Henkel Nopco)        2 g
- formiate de calcium        5 g

- polymère (Primal 2727, Rohm et Haas)        100 g
- eau        175 g

**FORMULE B**

- ciment Portland        350 g
- sable        590 g
- éther de cellulose
        (Culminai MHEC 15000 PFF Sté Aqualon)        3 g
- antimousse (Nopco 8034, Sté Henkel Nopco)        2 g
- formiate de calcium        5g
- émulsion de bitume        82 g
- eau        193 g

L'émulsion de bitume est préparée à l'aide de bitume Viatotal 70/100, la concentration en bitume étant de 61%. Le tensioactif est constitué de copolymère d'OE et d'OP (LC818C, Sidobre Sinnova)) à raison de 3,5%, et de nonylphénolpolyéthoxylé 15 OE à raison de 0,5%. La gomme de wélan est également ajouté à l'émulsion en tant qu'épaississant à raison de 0,05%.

Les deux mélanges ont été réalisés à l'aide d'un mélangeur Perrier en introduisant en premier lieu les constituants liquides puis les pulvérulents avec une agitation de 140 tours/min pendant 90 secondes. Des éprouvettes ont été réalisées afin de mesurer les caractéristiques mécaniques après 7 jours de prise et 28 jours de prise. Pour ce faire, les mortiers ont été coulés dans des moules en polystyrène expansé de dimensions 4 cm x 4 cm x 16 cm. Les éprouvettes placées dans les moules sont conservées à 23°C et 50% d'humidité relative.

Le module en flexion est mesuré à l'aide d'un dynamomètre avec une vitesse de descente de 1 mm/min. De même, et afin de caractériser la résistance à l'arrachement, des carreaux de céramique de dimension 5 cm x 5 cm sont collés à l'aide des mortiers-colle sur un support en béton. Ensuite, des crochets sont fixés sur les carreaux de céramique et le support en béton à l'aide d'une colle époxy rapide et l'ensemble est soumis à une traction de 1 mm/min à l'aide d'un dynamomètre. Les valeurs comparatives obtenues par les deux mortiers-colle sont regroupées dans le tableau IV suivant :

TABLEAU IV

|  | Module de Young | Résistance à l'arrachement |
|---|---|---|
| Formule A après 7 jours | 2,07 GPa | 1,21 MPa |
| Formule B après 7 jours | 1,78 GPa | 1,29 MPa |
| Formule A après 28 jours | 2,41 GPa | 1,57 MPa |
| Formule B après 28 jours | 2,13 GPa | 1,48 MPa |

On peut remarquer dans le cas de la substitution du polymère par du bitume que malgré une souplesse supérieure du mortier-colle (module de Young plus faible), les valeurs de la résistance à l'arrachement sont voisines de celles pour le mortier-colle sans substitution du polymère.

**Exemple 10** :

Des mortiers d'étanchéité sont réalisés à l'aide de ciment Portland associé à des polymères et des comparaisons sont faites avec un mortier réalisé avec un mélange de ciment Portland et une émulsion de bitume selon l'invention.

Les fournisseurs et natures des constituants énoncés ci-après sont identifiés dans le Tableau V ci-après :

TABLEAU V

| Constituants | Fournisseur | Nature |
|---|---|---|
| Ciment Portland S.P.L.C. | Lafarge | Ciment de type Portland Origine : St Pierre La Cour (S. P.L.C.) Dénomination: CPACEM1 52.5R |

TABLEAU V   (suite)

| Constituants | Fournisseur | Nature |
|---|---|---|
| Sable PE2L | Fulchiron | sable blanc à 99% de silice (50 à 200 µm) |
| Acronal S400 | B.A.S.F. | Latex de type acrylique à 57% d'extrait sec |
| Rhodapas SB 112 | Rhodia | Latex de type styrène-butadiène à 50% d'extrait sec |
| Emulsion de bitume | Lafarge | Emulsion contenant 60% de bitume |
| Nopco 8034 | Sidobre Sinnova | Antimousse:silice dispersée dans une huile minérale |
| CULMINAL MHEC 15.000 PFE | Hercules ou Aqualon | Epaississant: éther de cellulose non ionique de type MHEC Poids moléculaire: 15000g/mol |

**FORMULE C**

- Ciment Portland SPLC        100 g
- Sable PE2L
    (sable blanc à 99% de silice, 50 µm à 200 µm)        233 g
- Latex acrylique à 57% d'extrait sec
    (Acronal S400)        35 g
- Eau        55 g
- Epaississant éther de cellulose
    (Culminai MHEC 15000)        0,3 g
- Antimousse (Nopco 8034)        0,7 g

**FORMULE D**

- Ciment Portland SPLC        100 g
- Sable PE2L
    (sable blanc à 99% de silice, 50 µm à 200 µm)        233 g
- Latex styrène-butadiène à 50% d'extrait sec
    (Rhodapas SB 112)        40 g
- Eau 50 g
- Epaississant éther de cellulose
    (Culminal MHEC 15000)        0,3 g
- Antimousse (Nopco 8034)        0,7 g

**FORMULE E**

- Ciment Portland SPLC        100 g
- Sable PE2L
    (sable blanc à 99% de silice, 50 µm à 200 µm)        233 g
- Emulsion de bitume        33,3 g
- Eau        56,7 g
- Epaississant éther de cellulose
    (Culminai MHEC 15000)        0,3 g
- Antimousse (Nopco 8034)        0,7 g

Les mortiers ont été réalisés selon le même mode opératoire que dans l'exemple 9.
Afin de caractériser les propriétés d'étanchéité, des éprouvettes de dimension 4 cm x 4 cm x 16 cm ont été immergées dans de l'eau pour une durée de 24 heures. Les éprouvettes ont ensuite été retirées de l'eau, essuyées à l'aide d'un papier absorbant et pesées afin de calculer la reprise d'eau.

La reprise d'eau en % est calculée selon l'équation suivante :

$$RE = [(mF-ml)/ml] \times 100$$

où ml est la masse initiale de l'éprouvette avant immersion
mF est la masse de l'éprouvette après immersion

Les résultats sont regroupés dans le Tableau VI ci-dessous, les mesures étant effectuées après 3 jours, 7 jours et 28 jours de temps de prise des mortiers.

TABLEAU VI

|  | Formule C | Formule D | Formule E |
|---|---|---|---|
| RE 3 jours | 5,9 % | 2,8 % | 2,5 % |
| RE 7 jours | 2,0% | 3,9 % | 4,0% |
| RE 28 jours | 1,0 % | 5,2% | 2,0 % |

On peut remarquer que l'émulsion de bitume apporte des caractéristiques proches voire meilleures que les polymères.

**Exemple 11 :**

Comme pour l'exemple 9, des mortiers-colle sont réalisés à l'aide de mélanges de ciments Portland et de polymère ou d'émulsion de bitume. Les formules et le mode opératoire sont les mêmes que pour l'exemple 9. L'émulsion de bitume est préparée à l'aide de bitume 70/100 pigmentable de Shell, avec une concentration de bitume de 61%. Le tensioactif est constitué de nonylphénol polyéthoxylé 15 OE à raison de 3,5%, et on ajoute également à l'émulsion 0,05% de gomme de wélan et 2% d'antimousse (Nopco 8034).

Comme pour l'exemple 9, les caractéristiques mécaniques ont été mesurées après 7 jours et 28 jours de temps de prise.

La formule de mortier à base de bitume a été modifiée par l'addition de 2% d'antimousse de type Nopco 8034 (formule F). Les valeurs d'arrachement et de module sont regroupées dans le Tableau VII ci-après :

TABLEAU VII

|  | Module de Young | Résistance à l'arrachement |
|---|---|---|
| Formule A après 7 jours | 2,07 GPa | 1,21 MPa |
| Formule F après 7 jours | 1,42 GPa | 1,03 MPa |
| Formule A après 28 jours | 2,41 GPa | 1,57 MPa |
| Formule F après 28 jours | 1,66 GPa | 1,15 MPa |

On peut remarquer dans ce cas, une souplesse plus importante du bitume tout en gardant des résistances à l'arrachement acceptables.

Les émulsions obtenues selon l'invention ont donc une bonne stabilité en présence de différents additifs (fluidifiants, dispersants, épaississants, antimousse, pigments, charges, coalescents etc). De même, les mélanges de dispersions de polymères de différentes natures et d'émulsions de bitume ne posent pas de problème. Dans tous les cas l'émulsion de bitume apporte des propriétés voisines à celles obtenues à l'aide de dispersions de polymères.

**Exemple 12**

Des graves pour assises de chaussée sont réalisées à l'aide de liant hydraulique (Rolac 125) selon les formules suivantes (100 % représente le poids des matériaux secs) :

| Formule F | |
| --- | --- |
| Liant hydraulique : Rolac 125 | 3,5 % |
| Grave : Calcaire de l'Estaque 0/20 mm | 96,5 % |
| Emulsion aqueuse de bitume | 0 % |
| Eau | 5 % |

| Formule G | |
| --- | --- |
| Liant hydraulique : Rolac 125 | 3,5 % |
| Grave : Calcaire de l'Estaque 0/20 mm | 94,75 % |
| Emulsion aqueuse de bitume | 1,75 % |
| Eau | 5 % |

| Formule H | |
| --- | --- |
| Liant hydraulique : Rolac 125 | 3,5 % |
| Grave : Calcaire de l'Estaque 0/20 mm | 93 % |
| Emulsion aqueuse de bitume | 3,5 % |
| Eau : | 5% |

Le Rolac 125 est un liant pour traitement des graves à base de clinker et de laitier adjuvantés, commercialisé par la Société Lafarge Ciments.

La formule témoin est la formule F ne contenant pas d'émulsion de bitume.

L'émulsion aqueuse de bitume est préparée à l'aide de bitume Viatotal 80/100, (vendu par la Société Total), avec une concentration en bitume de 60 %. Le tensioactif est constitué de 3,5 % de copolymère d'OE et d'OP (LC 818C, Sidobre Sinnova), et de 0,5 % de nonylphénol oxyéthyléné 150E ; on rajoute également à l'émulsion 0,95% de gomme de wélan en tant qu'épaississant, et 0,1 % d'antimousse (NOPCO 8034 de Henkel)

Une gomme de welan a été également ajoutée à l'émulsion en tant qu'épaississant à raison de 0,05%, ainsi qu'un agent antimousse à raison de 0,1% (Nopco 8034 de Henkel Nopco).

Les malaxages sont réalisés à l'aide d'un malaxeur pour assises traitées (LCPC) tournant en petite vitesse selon le mode opératoire suivant :

- introduction des constituants pulvérulents : 30 secondes,
- introduction de l'eau : 15 secondes,
- malaxage : 1 minute,
- introduction de l'émulsion : 15 secondes,
- malaxage : 1 minute.

Les éprouvettes sont ensuite moulées par vibro-compression en moules PVC afin de mesurer :

- les délais de maniabilité par auscultation dynamique (éprouvettes 16*32 cm) selon la norme NF P 98-231-5,
- les tractions directes (éprouvettes 16*32 cm évidées en partie centrale pour avoir une surface de 154 cm$^2$) selon la norme NF P 98-232-2.

Les éprouvettes dans leur moule sont conservées à 20°C.

Les valeurs comparatives obtenues sur les trois graves sont regroupées dans le tableau VIII.

On peut remarquer que l'addition de bitume dans la formule de grave fait chuter de manière sensible le module sans affecter la résistance à la rupture. Cela revient à augmenter la souplesse du matériau en conservant ses propriétés de résistance, permettant ainsi de redimensionner la chaussée et diminuer l'épaisseur de la grave.

TABLEAU VIII

|  |  | Formule F | Formule G | Formule H |
|---|---|---|---|---|
|  | Densité | 2,308 | 2,308 | 2,226 |
| 28 jours | Résistance à la rupture (Td) | 0,93Mpa | 0,87Mpa | 0,89 Mpa |
|  | Module (E) | 19930 Mpa | 15920 Mpa | 9280 Mpa |
|  | E/(Td*1000) | 21,4 | 18,3 | 10,4 |
| 60 jours | Résistance à la rupture (Td) | 0,97 | 0,95 | 0,97 |
|  | Module (E) | 22500 | 18900 | 12610 |
|  | E/(Td*1000) | 23,2 | 19,9 | 13,0 |

**Revendications**

1. Emulsion aqueuse de bitume comprenant un tensio-actif, 0 à 5 % d'épaississant, 0 à 1 % d'anti-mousse, qsp 100 % d'eau, **caractérisée en ce que** le bitume est dans la proportion pondérale de 50 à 70 %, et le tensio-actif dans la proportion de 0,5 à 10 %, et consiste en un copolymère d'oxyde d'éthylène et d'oxyde de propylène, de rapport molaire OP/OE compris entre 1,5 et 10.

2. Emulsion selon la revendication 1, **caractérisée en ce que** la masse moléculaire du copolymére d'oxyde d'éthylène et d'oxyde de propylène est comprise entre 1000 et 2200, et de préférence est 2000.

3. Emulsion selon la revendication 1 ou la revendication 2, **caractérisée en ce qu'**elle comprend en outre un tensio-actif supplémentaire, différent du copolymère des revendications 1 et 2, qui joue le rôle d'agent hydrotrope et qui est non ionique.

4. Emulsion selon la revendication 3, **caractérisée en ce que** l'agent hydrotrope est choisi dans le groupe consistant en les tensioactifs non ioniques suivants :

   - les alkylphénols polyéthoxylés de valeur HLB comprise entre 13 et 17;
   - les alcools gras polyéthoxylés de valeur HLB comprise entre 12 et 15.

5. Emulsion selon la revendication 4, **caractérisée en ce que** l'agent hydrotrope est un alkyphénol polyéthoxylé de valeur HLB comprise entre 13 et 17, et est choisi dans le groupe consistant en le nonylphénol 10 OE à 20 OE, et le tributylphénol 11 OE à 30 OE.

6. Emulsion selon la revendication 4, **caractérisée en ce que** l'agent hydrotrope est choisi dans le groupe constitué par l'isotridécanol 8 OE, le décanol 8 OE, le tridécanol 10 OE et le dodécanol 7OE.

7. Emulsion selon la revendication 1, **caractérisée en ce qu'**elle comprend un mélange d'un copolymére constitué d'un copolymére d'oxyde d'éthylène et d'oxyde de propylène de rapport OP/OE compris entre 1,5 et 10 et présentant une masse moléculaire de 2000, et d'un nonylphénol polyéthoxylé 10 OE à 20 OE.

8. Emulsion selon la revendication 7, **caractérisée en ce que** les pourcentages du tensioactif constitué du mélange du copolymère d'oxyde d'éthylène et d'oxyde de propylène, et du nonylphénol polyéthoxylé 10 OE à 20 OE, sont de 0,7 % à 5 %, et de 0,1 % à 1 %, respectivement.

9. Emulsion selon la revendication 4 ou la revendication 7, **caractérisée en ce qu'**elle contient au moins 3 % du copolymère d'oxyde d'éthylène et d'oxyde de propylène, avec un rapport de copolymère/tensioactif hydrotrope compris entre 5 et 7.

10. Emulsion selon l'une quelconque des revendications précédentes, **caractérisée en ce que** le bitume est un bitume émulsifiable à pression atmosphérique, choisi dans le groupe consistant en les qualités d'indice de pénétrabilité (dixièmes de millimètre de pénétration) comprises entre 40 à 220, les qualités désasphaltées, les qualités de synthèse, et les mélanges plastifiés à l'aide de polymères.

**11.** Emulsion selon l'une quelconque des revendications précédentes, caractérisée an ce qu'elle comprend un épaississant choisi dans le groupe consistant en les épaississants cellulosiques, les gommes végétales, las gommes produites par fermentation bactérienne, les argiles gonflantes, et les épaississants de type synthétique.

**12.** Emulsion selon la revendication 11, **caractérisée en ce que** l'épaississant est choisi dans le groupe consistant en la gomme de caroube, la gomme de guar, la gomme d'adragante, la gomme de karaya, l'amidon, les alginates, la gomme arabique, la gomme de xanthane, la gomme de welan, l'atapulgile, la sépiolite, la bentonite, les polymères acryliques associatifs ou non, et les polyuréthanes.

**13.** Emulsion selon la revendication 12, **caractérisée en ce que** l'épaississant est la gomme de welan.

**14.** Emulsion selon l'une quelconque des revendications précédentes, **caractérisée en ce qu'**elle comprend un agent anti-mousse choisi dans le groupe consistant en les mélanges de silice et d'huile minérale, les polysiloxanes, le tributylphosphate, et les savons métalliques.

**15.** Procédé de fabrication d'une émulsion aqueuse de bitume selon l'une quelconque des revendications précédentes, **caractérisé en ce qu'**il comprend les étapes consistant à :

- préparer la phase aqueuse, de préférence à l'aide d'un épaississent incorporé dans l'eau sous agitation;
- ajouter à la phase aqueuse au moins le copolymère d'oxyde d'éthylène et d'oxyde de propyléne ;
- chauffer la phase aqueuse à une température comprise entre 40 et 70°C;
- incorporer le bitume préalablement chauffé entre 140°C à 180°C, dans la phase aqueuse sous forte agitation mécanique.

**16.** Composition à base d'au moins un liant hydraulique ou organique, et/ou à base d'au moins une charge minérale ou organique, contenant une émulsion de bitume selon l'une quelconque des revendications 1 à 14, ou susceptible d'être obtenue selon la revendication 15.

**17.** Composition selon la revendication 16, **caractérisée en ce que** le liant hydraulique est constitué d'au moins un liant hydraulique choisi dans le groupe consistant en un ciment de Portland ou équivalent, un aiment à base de laitier, un ciment alumineux, et un sulfate de calcium.

**18.** Composition selon la revendication 16, **caractérisée en ce que** le liant organique est constitué d'au moins un liant polymère, choisi dans le groupe consistant en les styrènes butadiènes, les copolymères acryliques, et les éthylène polyvinylacétates.

**19.** Composition selon la revendication 16, **caractérisée en ce que** la charge minérale est constituée d'au moins une charge généralement inerte, du type habituellement utilisé dans les formulations de l'industrie du bâtiment et du génie civil, choisie dans le groupe consistant en le sable, les agrégats, la silice, les carbonates de calcium, le sulfate de baryum, le talc, et le mica.

**20.** Composition selon la revendication 16, **caractérisée en ce que** la charge organique est constituée d'au moins une charge organique choisie dans le groupe consistant en les fibres polymères, les fibres de cellulose, et/ou les billes de polystyrène.

**21.** Composition pour graves et sables pour assises de chaussée, à base de liant hydraulique du type laitier ou clinker de ciment portland ou équivalent, contenant de 0,5 à 6 % en poids d'une émulsion de bitume selon l'une quelconque des revendications 1 à 14, ou susoeptible d'être obtenue selon la revendication 15.

**22.** Procédé de préparation d'une composition selon la revendication 21, caractérisé on ce qu'on effectue le mélange dans un seul et même malaxeur sur chantier, ou en centrale distante du chantier.

**23.** Utilisation d'une émulsion aqueuse de bitume selon l'une quelconque des revendications 1 à 14, ou susceptible d'être obtenue selon la revendication 15, pour la formulation d'une composition choisie dans le groupe consistant en les mortiers, les mortiers-colle, les enduits de façade, les enduits de ragréage, les peintures, les bétons, les primaires d'accrochage, lcs primaires d'imperméabilisation, les joints de chaussée, les graves et sables pour assises de chaussée, les sols ou mâchefers d'incinération d'ordures ménagères pour utilisation en remblais, les produits à froid de substitution des enrobés à chaud pour couches de roulement de routes et les couches de forme et d'assise de chaussée et les mortiers de scellement.

24. Utilisation selon la revendication 23, **caractérisée en ce que** la composition comprend au moins un liant hydraulique ou organique, et/ou au moins une charge minérale ou organique.

25. Utilisation selon la revendication 24, **caractérisée en ce que** le liant hydraulique est constitué d'au moins un liant hydraulique choisi dans le groupe consistant en un ciment de Portland ou équivalent, un ciment alumineux, et un sulfate de calcium.

26. Utilisation selon la revendication 24, **caractérisée en ce que** le liant organique est constitué d'au moins un liant polymère, choisi dans le groupe consistant en les styrènes butadiènes, les copolymères acryliques, et les éthylène polyvinylacétates.

27. Utilisation selon la revendication 24, **caractérisée en ce que** la charge minérale est constituée d'au moins une charge généralement inerte, du type habituellement utilisé dans les formulations de l'industrie du bâtiment et du génie civil, choisie dans le groupe consistant en le sable, les agrégats, la silice, les carbonates de calcium, les silicates de calcium, le sulfate de baryum, le talc, et lc mica.

28. Utilisation selon la revendication 24, **caractérisée en ce que** la charge organique est constituée d'au moins une charge organique or choisie dans le groupe consistant en les fibres polymères, les fibres de cellulose, et les billes de polystyrène.

29. Kit de matériaux de construction, comprenant d'une part une émulsion de bitume selon l'une quelconque des revendications 1 à 14, ou susceptible d'être obtenue selon la revendication 15, ou utilisée selon la revendication 23, et d'autre part au moins un liant hydraulique ou organique, et/ou au moins une charge minérale ou organique.

**Claims**

1. Aqueous bitumen emulsion comprising a surfactant, 0 to 5% thickener, 0 to 1% antifoaming agent, and water qs 100%, **characterised in that** the bitumen is in a proportion by weight of 50 to 70 %, and the surfactant in a proportion of 0.5 to 10 %, and consists of a copolymer of ethylene oxide and of propylene oxide, with an OP/OE mol ratio of between 1.5 and 10.

2. Emulsion according to claim 1, **characterised in that** the molecular mass of the copolymer of ethylene oxide and of propylene oxide is between 1000 and 2200, and is preferably 2000.

3. Emulsion according to claim 1 or claim 2,
   **characterised in that** it comprises in addition a supplementary surfactant, different from the copolymer of claims 1 and 2, which plays the part of a hydrotropic agent and which is non-ionic.

4. Emulsion according to claim 3, **characterised in that** the hydrotropic agent is selected from the group consisting of the following non-ionic surfactants:

   - polyethoxylated alkylphenols with an HLB value of between 13 and 17;

   - polyethoxylated fatty alcohols with an HLB value of between 12 and 15.

5. Emulsion according to claim 4, **characterised in that** the hydrotropic agent is a polyethoxylated alkylphenol with an HLB value of between 13 and 17, and is selected from the group consisting of nonylphenol 10 OE to 20 OE, and tributylphenol 11 OE to 30 OE.

6. Emulsion according to claim 4, **characterised in that** the hydrotropic agent is selected from the group made up of isotridecanol 8 OE, decanol 8 OE, tridecanol 10 OE and dodecanol 7 OE.

7. Emulsion according to claim 1, **characterised in that** it comprises a mixture of a copolymer made up of a copolymer of ethylene oxide and of propylene oxide with an OP/OE ratio of between 1.5 and 10 and having a molecular mass of 2000, and of a polyethoxylated nonylphenol 10 OE to 20 OE.

8. Emulsion according to claim 7, **characterised in that** the percentages of the surfactant made up of the mixture of the copolymer of ethylene oxide and of propylene oxide, and of the polyethoxylated nonylphenol 10 OE to 20 OE, are 0.7 to 5% and 0.1% to 1% respectively.

9. Emulsion according to claim 4 or claim 7,
**characterised in that** it contains at least 3% of the copolymer of ethylene oxide and of propylene oxide with a ratio of copolymer to hydrotropic surfactant of between 5 and 7.

10. Emulsion according to any one of the preceding claims, **characterised in that** the bitumen is a bitumen which can be emulsified at atmospheric pressure, selected from the group consisting of the grades with a penetrability index (tenths of millimetres of penetration) of between 40 and 220, the deasphalted grades, the synthesis grades and the mixtures plasticised with the aid of polymers.

11. Emulsion according to any one of the preceding claims, **characterised in that** it includes a thickener selected from the group consisting of cellulose thickeners, vegetable gums, gums produced by bacterial fermentation, swelling clays, and synthetic thickeners.

12. Emulsion according to claim 11, **characterised in that** the thickener is selected from the group consisting of carob gum, guar gum, gum tragacanth, karaya gum, starch, alginates, gum arabic, xanthan gum, welan gum, atapulgite, sepiolite, bentonite, associative or non-associative acrylic polymers, and polyurethanes.

13. Emulsion according to claim 12, **characterised in that** the thickener is welan gum.

14. Emulsion according to any one of the preceding claims, **characterised in that** it includes an antifoaming agent selected from the group consisting of mixtures of silica and mineral oil, polysiloxanes, tributyl phosphate and metal soaps.

15. Method of manufacturing an aqueous bitumen emulsion according to any one of the preceding claims, **characterised in that** it comprises the stages consisting of:

   - preparing the aqueous phase, preferably with the aid of a thickener incorporated into the water with stirring;

   - adding to the aqueous phase at least the copolymer of ethylene oxide and of propylene oxide;

   - heating the aqueous phase to a temperature of between 40 and 70°C;

   - incorporating the bitumen, previously heated to between 140°C and 180°C, into the aqueous phase with vigorous mechanical stirring.

16. Composition based on at least one hydraulic or organic binder and/or based on at least one mineral or organic filler, containing a bitumen emulsion according to any one of claims 1 to 14, or capable of being obtained according to claim 15.

17. Composition according to claim 16, **characterised in that** the hydraulic binder is made up of at least one hydraulic binder selected from the group consisting of a Portland cement or equivalent, a slag-based cement, a high-alumina cement, and a calcium sulphate.

18. Composition according to claim 16, **characterised in that** the organic binder is made up of at least one polymer binder, selected from the group consisting of styrene-butadienes, acrylic copolymers and ethylene polyvinyl acetates.

19. Composition according to claim 16, **characterised in that** the mineral filler is made up of at least one generally inert filler, of the type generally used in the formulations of the building and civil engineering industries, selected from the group consisting of sand, aggregates, silica, calcium carbonates, barium sulphate, talc and mica.

20. Composition according to claim 16, **characterised in that** the organic filler is made up of at least one organic filler selected from the group consisting of polymer fibres, cellulose fibres and/or polystyrene beads.

21. Composition for gravels and sands for road foundations, based on hydraulic binder of the type of slag or clinker of Portland cement or equivalent, containing 0.5 to 6 % by weight of a bitumen emulsion according to any one of claims 1 to 14, or capable of being obtained according to claim 15.

22. Method of preparing a composition according to claim 21, **characterised in that** the mixture is made in one and the same mixer at the site, or at a mixing plant remote from the site.

23. Use of an aqueous bitumen emulsion according to any one of claims 1 to 14, or capable of being obtained according to claim 15 for the formulation of a composition selected from the group consisting of mortars, adhesive mortars, finish plasters, façade plasters, paints, concretes, primary bonding coatings, primary waterproof coatings, road joints, gravels and sands for road foundations, sols or clinker from the incineration of household rubbish, cold products to substitute for hot mixes for upper road layers and selected fill and foundation layers for roads, and sealing mortars.

24. Use according to claim 23, **characterised in that** the composition comprises at least one hydraulic or organic binder, and/or at least one mineral or organic filler.

25. Use according to claim 24, **characterised in that** the hydraulic binder is made up of at least one hydraulic binder selected from the group consisting of a Portland cement or equivalent, a high-alumina cement and a calcium sulphate.

26. Use according to claim 24, **characterised in that** the organic binder is made up of at least one polymer binder, selected from the group consisting of styrene-butadienes, acrylic copolymers, and ethylene polyvinyl acetates.

27. Use according to claim 24, **characterised in that** the mineral filler is made up of at least one generally inert filler, of the type generally used in the formulations of the building and civil engineering industries, selected from the group consisting of sand, aggregates, silica, calcium carbonates, calcium silicates, barium sulphate, talc and mica.

28. Use according to claim 24, **characterised in that** the organic filler is made up of at least one organic filler now selected from the group consisting of polymer fibres, cellulose fibres and polystyrene beads.

29. Kit of construction materials comprising firstly a bitumen emulsion according to any one of claims 1 to 14, or capable of being obtained according to claim 15, or used according to claim 23, and secondly at least one hydraulic or organic binder, and/or at least one mineral or organic filler.

**Patentansprüche**

1. Wässerige bituminöse Emulsion, welche ein Tensid, 0 bis 5 % Verdickungsmittel, 0 bis 1 % Schaumbrecher, qsp 100 % Wasser umfasst und
**dadurch gekennzeichnet ist, dass** das Bitumen im Gewichtsverhältnis von 50 bis 70 % und das Tensid im Verhältnis von 0,5 bis 10 % vorhanden sind und das Bitumen aus einem Copolymer aus Ethylenoxid und Propylenoxid im Molarverhältnis PO/EO zwischen 1,5 und 10 besteht.

2. Emulsion nach Anspruch 1 **dadurch gekennzeichnet, dass** die Molekularmasse des Copolymers aus Ethylenoxid und Propylenoxid zwischen 1000 und 2000, vorzugsweise bei 2200, liegt.

3. Emulsion nach Anspruch 1 oder Anspruch 2 **dadurch gekennzeichnet, dass** sie außerdem ein zusätzliches Tensid umfasst, das sich vom Copolymer der Ansprüche 1 und 2 unterscheidet, die Rolle des hydrotropen Wirkstoffs spielt und nicht ionisch ist.

4. Emulsion nach Anspruch 3 **dadurch gekennzeichnet, dass** der hydrotrope Wirkstoff aus der Gruppe ausgewählt wird, die aus folgenden, nicht ionischen Tensiden besteht:

   - Polyethoxylierte Alkylphenole mit einem HLB-Wert zwischen 13 und 17;

- Polyethoxylierte Fettalkohole mit einem HLB-Wert zwischen 12 und 15.

5. Emulsion nach Anspruch 4 **dadurch gekennzeichnet, dass** der hydrotrope Wirkstoff ein polyethoxyliertes Alkylphenol mit einem HLB-Wert zwischen 13 und 17 ist und aus der Gruppe ausgewählt wird, die aus Nonylphenol 10 EO bis 20 EO und Tributylphenol 11 EO bis 30 EO besteht.

6. Emulsion nach Anspruch 4 **dadurch gekennzeichnet, dass** der hydrotrope Wirkstoff aus der Gruppe ausgewählt wird, die aus Isotridecanol 8 EO, Decanol 8 EO, Tridecanol 10 EO und Dodecanol 7 EO gebildet wird.

7. Emulsion nach Anspruch 1 **dadurch gekennzeichnet, dass** sie ein Gemisch aus einem Copolymer einerseits, das aus einem Copolymer aus Ethylenoxid und Propylenoxid im PO/EO-Verhältnis zwischen 1,5 und 10 gebildet ist und eine Molekularmasse von 2000 aufweist, und einem polyethoxylierten Nonylphenol 10 EO bis 20 EO andererseits umfasst.

8. Emulsion nach Anspruch 7 **dadurch gekennzeichnet, dass** die Prozentsätze des Tensids, das aus dem Gemisch des Copolymers aus Ethylenoxid und Propylenoxid und des polyethoxylierten Nonylphenols 10 EO bis 20 EO gebildet ist, jeweils zwischen 0,7 % bis 5 % und 0,1 % bis 1 % betragen.

9. Emulsion nach Anspruch 4 oder Anspruch 7 **dadurch gekennzeichnet, dass** sie mindestens 3 % des Copolymers aus Ethylenoxid und Propylenoxid im Verhältnis des Copolymers zum hydrotropen Tensid zwischen 5 und 7 enthält.

10. Emulsion nach irgendeinem der vorigen Ansprüche **dadurch gekennzeichnet, dass** das Bitumen ein bei Atmosphärendruck emulgierbares Bitumen ist und aus der Gruppe ausgewählt wird, welche Meßzifferqualitäten der Durchdringbarkeit (Zehntel Millimeter Durchdringung) zwischen 40 bis 220, Entasphaltierungsqualitäten, Synthesequalitäten sowie mit Hilfe von Polymeren plastifizierte Gemische aufweist.

11. Emulsion nach irgendeinem der vorigen Ansprüche **dadurch gekennzeichnet, dass** sie ein Verdickungsmittel umfasst, das aus der Gruppe ausgewählt wird, die aus cellulosischen Verdickungsmitteln, pflanzlichen Gummis, durch Bakterienfermentation gewonnenen Gummis, quellenden Tonerden und synthetischen Verdickungsmitteln besteht.

12. Emulsion nach Anspruch 11 **dadurch gekennzeichnet, dass** das Verdickungsmittel aus der Gruppe ausgewählt wird, die aus Johannisbrotkerngummi, Guar-Gummi, Tragant, Karaya-Gummi, Stärke, Alginaten, Gummi arabicum, Xanthangummi, Welangummi, Atapulgit, Sepiolith, Bentonit, assoziativen oder nicht assoziativen Akrylpolymeren und Polyurethanen besteht.

13. Emulsion nach Anspruch 12 **dadurch gekennzeichnet, dass** das Verdickungsmittel der Welangummi ist.

14. Emulsion nach irgendeinem der vorigen Ansprüche **dadurch gekennzeichnet, dass** sie einen Schaumbrecher umfasst, der aus der Gruppe ausgewählt wird, die aus Kieselerde-Mineralöl-Gemischen, Polysiloxanen, Tributylphosphaten und Metallseifen besteht.

15. Verfahren zur Herstellung einer wässerigen bituminösen Emulsion nach irgendeinem der vorigen Ansprüche **dadurch gekennzeichnet, dass** es folgende Schritte umfasst:

   - die wässerige Phase zubereiten, vorzugsweise mit Hilfe eines dem Wasser unter Agitation beigemengten Verdickungsmittels,
   - zur wässerigen Phase zumindest das Copolymer aus Ethylenoxid und Propylenoxid beifügen,
   - die wässerige Phase auf eine Temperatur zwischen 40° und 70° C erhitzen,
   - das zuvor auf 140°C bis 180°C erhitzte Bitumen der wässerigen Phase unter starker mechanischer Agitation beimengen.

16. Zusammensetzung auf der Basis von mindestens einem hydraulischen oder organischen Bindemittel und/oder auf der Basis von mindestens einer mineralischen oder organischen Charge, die eine bituminöse Emulsion nach irgendeinem der Ansprüche 1 bis 14 oder eine nach Anspruch 15 herstellbare bituminöse Emulsion umfasst.

17. Zusammensetzung nach Anspruch 16 **dadurch gekennzeichnet, dass** das hydraulische Bindemittel aus mindestens einem hydraulischen Bindemittel gebildet ist, das aus der Gruppe ausgewählt wird, die aus Portlandzement oder gleichwertigem Zement, einem Zement auf Schlackenbasis, aus tonerdehaltigem Zement und Kalziumsulfat besteht.

18. Zusammensetzung nach Anspruch 16 **dadurch gekennzeichnet, dass** das organische Bindemittel aus mindestens einem polymeren Bindemittel gebildet ist, das aus der Gruppe ausgewählt wird, die aus Butadienstyrenen, Akrylcopolymeren und Polyvinylacetat-Ethylenen besteht.

19. Zusammensetzung nach Anspruch 16 **dadurch gekennzeichnet, dass** die mineralische Charge aus mindestens einer allgemein inerten Charge besteht vom Typ, der gewöhnlich in den Ansätzen der Bauindustrie und des Tiefbaus verwendet wird, die aus der Gruppe ausgewählt wird, die aus Sand, Aggregaten, Kieselerde, Kalziumkarbonaten, Bariumsulfat, Talk und Mika besteht.

20. Zusammensetzung nach Anspruch 16 **dadurch gekennzeichnet, dass** die organische Charge aus mindestens einer organischen Charge gebildet ist, die aus der Gruppe ausgewählt wird, die aus polymeren Fasern, cellulosischen Fasern und/oder Polystyrolkugeln besteht.

21. Zusammensetzung für Kies und Sand für Fahrbahnfundamente auf der Basis eines hydraulischen Bindemittels vom Typ Schlacken oder Klinker aus Portlandzement oder gleichwertigem Zement, welche 0,5 bis 6 % an Gewicht eine bituminöse Emulsion nach irgendeinem der Ansprüche 1 bis 14 oder eine nach Anspruch 15 herstellbare bituminöse Emulsion enthält.

22. Verfahren zur Herstellung einer Zusammensetzung nach Anspruch 21 **dadurch gekennzeichnet, dass** man das Gemisch in ein- und demselben Mischer auf der Baustelle oder in der Zentrale von der Baustelle entfernt herstellt.

23. Verwendung einer wässerigen bituminösen Emulsion nach irgendeinem der Ansprüche 1 bis 14 oder einer nach Anspruch 15 herstellbaren bituminösen Emulsion für die Formulierung einer Zusammensetzung, die aus der Gruppe ausgewählt wird, die aus Mörtel, Klebemörtel, Fassadenputz, Überarbeitungsputz, Anstrichen, Beton, Haftgrundierungen, Undurchlässigkeitsgrundierungen, Fahrbahnverbindungen, Kies und Sand für Fahrbahnfundamente, Baugrund oder Schlacken aus der Hausmüllverbrennung zur Verwendung für Erdaufschüttungen, kalten Substitutionsprodukten von heißen Mischgütern für Straßendeckschichten, Planum und Fundamentschichten für Fahrbahnen sowie Versiegelungsmörtel besteht.

24. Verwendung nach Anspruch 23 **dadurch gekennzeichnet, dass** die Zusammensetzung mindestens ein hydraulisches oder organisches Bindemittel und/oder mindestens eine mineralische oder organische Charge umfasst.

25. Verwendung nach Anspruch 24 **dadurch gekennzeichnet, dass** das hydraulische Bindemittel aus mindestens einem hydraulischen Bindemittel gebildet ist, das aus der Gruppe ausgewählt wird, die aus Portlandzement oder gleichwertigem Zement, aus tonerdehaltigem Zement und Kalziumsulfat besteht.

26. Verwendung nach Anspruch 24 **dadurch gekennzeichnet, dass** das organische Bindemittel aus mindestens einem Polymerbindemittel gebildet ist, das aus der Gruppe ausgewählt wird, die aus Butadienstyrenen, Akrylcopolymeren und Polyvinylacetat-Ethylen besteht.

27. Verwendung nach Anspruch 24 **dadurch gekennzeichnet, dass** die mineralische Charge aus mindestens einer allgemein inerten Charge vom Typ, der gewöhnlich in den Ansätzen für die Bauindustrie und den Tiefbau verwendet wird, gebildet ist und aus der Gruppe ausgewählt wird, die aus Sand, Aggregaten, Kieselerde, Kalziumkarbonaten, Kalziumsilikaten, Bariumsulfat, Talk und Mika besteht.

28. Verwendung nach Anspruch 24 **dadurch gekennzeichnet, dass** die organische Charge aus mindestens einer organischen Charge gebildet ist, die aus der Gruppe ausgewählt wird, die aus polymeren Fasern, cellulosischen Fasern und Polystyrolkugeln besteht.

29. Konstruktionsmaterialbausätze, die einerseits eine bituminöse Emulsion nach irgendeinem der Ansprüche 1 bis 14 oder eine nach Anspruch 15 herstellbare oder nach Anspruch 23 verwendbare bituminöse Emulsion und andererseits mindestens ein hydraulisches oder organisches Bindemittel und/oder mindestens eine mineralische oder organische Charge umfassen.

## FIG 1

DP : Début de prise          FP : Fin de prise

## FIG 2

TEMPS EN HEURES

FIG 3

Disparition de C3S

Legend:
- Témoin
- 2% LC 818C / Ciment
- 5% LC 818C / Ciment
- 10% LC 818C / Ciment

Nombre d'impulsions: 200, 400, 600

Temps en heures: 0, 8, 16, 24

FIG 4

°C: 20, 30, 40, 50, 60

Legend:
- 0% LC 818C
- 2% LC 818C / Ciment
- 5% LC 818C / Ciment
- 10% LC 818C / Ciment

Temps en heures: 0, 8, 16, 24

FIG 5

FIG 6

FIG 7

Résistance en Mpa

| Témoin |
| 2% LC 818C / Ciment |
| 5% LC 818C / Ciment |
| 10% LC818C / Ciment |

40

30

20

10

0       7       14       21       28   Jours

FIG 8

Résistance en Mpa

| Témoin |
| 2% LC 818C / Ciment |
| 5% LC 818C / Ciment |
| 10% LC 818C / Ciment |

3

2,5

2

1,5

1

0       7       14       21       28   Jours

FIG 9

Légende:
— Témoin
‑ ‑ ‑ 2% LC 818C / Ciment
— — 5% LC 818C / Ciment
▒▒▒ 10% LC 818C / Ciment